# EUROPÄISCHE PATENTSCHRIFT

(11) **EP 1 500 322 B1**
(45) Veröffentlichungstag und Bekanntmachung des Hinweises auf die Patenterteilung: **18.10.2006**
(21) Anmeldenummer: 04450072.6
(22) Anmeldetag: 30.03.2004
(51) Int. Cl.: A01B 73/04

(54) **Vorrichtung zur Bodenbearbeitung**
Soil working device
Dispositif pour le travail du sol

(30) Priorität: 24.07.2003 AT 11752003
(43) Veröffentlichungstag der Anmeldung: 26.01.2005
(73) Patentinhaber: Vogel & Noot Landmaschinen GmbH & Co KG, 8661 Wartberg (AT)
(72) Erfinder: Ing. Helmut Jambor, 8661 Wartberg i. M. (AT)
(74) Vertreter: Atzwanger, Richard

(56) Entgegenhaltungen:
- EP-A- 0 316 560
- DE-U- 9 214 242
- US-A- 4 281 720
- US-A- 4 878 545

## Beschreibung

Die gegenständliche Erfindung betrifft eine Vorrichtung zur Bodenbearbeitung bestehend aus einem an ein Zugfahrzeug ankuppelbaren, mehrteiligen Tragrahmen für Arbeitswerkzeuge, wie Grubberzinken, Schneidscheiben, Walzen od.dgl, welche sich quer zur Fahrtrichtung des Zugfahrzeuges über eine Arbeitsbreite von mehreren Metern erstrecken, wobei die sich quer zur Fahrtrichtung nebeneinander befindlichen Arbeitswerkzeuge an drei nebeneinander angeordneten Tragrahmenteilen angeordnet sind und die beiden außen befindlichen Tragrahmenteile mittels an diesen und am mittleren Tragrahmenteil angelenkter Stellhebel, welche unter Wirkung mindestens eines Stellzylinders stehen, aus ihrer Arbeitslage in angenähert vertikale Transportlagen verstellbar sind.

Aufgrund der großen Schleppleistungen von Zugfahrzeugen können Vorrichtungen zur Bodenbearbeitung eine Arbeitsbreite von bis über 6 m aufweisen. Dabei besteht jedoch das Erfordernis, diese so auszubilden, dass sie für den Transport eine Breite von maximal 3 m aufweisen. Hierfür ist es einerseits bekannt, den Tragrahmen mit den Arbeitswerkzeugen mit zwei sämtliche Arbeitswerkzeuge aufweisenden Tragrahmenteilen auszubilden, welche beiden Tragrahmenteile für den Transport dieser Vorrichtung in angenähert vertikale Lagen verschwenkbar sind, wobei sich zwischen diesen beiden Tragrahmenteilen ein weiterer Tragrahmenteil befindet, welcher nur mit einem Teil der Arbeitsgeräte ausgebildet ist. Diese Konstruktion ist jedoch deshalb nachteilig, da sie eine so große Höhe aufweist, dass Behinderungen beim Transport bedingt werden, da z.B. Unterführungen mit geringer Höhe nicht durchfahrbar sind.

Weitere Nachteile einer derartigen Vorrichtung bestehen darin, dass deren Schwerpunkt sehr hoch liegt, welcher Sachverhalt bei einem Verfahren dieser Vorrichtung in Kurven und bei Hanglagen berücksichtigt werden muss, sowie dass beim Abstellen derselben die Gefahr des Umkippens besteht, weswegen hierfür einer der beiden seitlichen Tragrahmenteile ausgeklappt werden muss, und dass weiters der sehr schmale mittlere Tragrahmenteil für sich alleine nicht zur Bodenbearbeitung herangezogen werden kann.

Es ist andererseits auch bekannt, den Tragrahmen für die Arbeitswerkzeuge mit drei gegeneinander verschwenkbaren Teilen auszubilden, wobei für den Transport der mittlere Tragrahmenteil in seiner angenähert horizontalen Lage verbleibt, wogegen die beiden seitlich außen befindlichen Tragrahmenteile um etwa 180° über den mittleren Tragrahmenteil verschwenkt werden. Hierdurch weist diese Vorrichtung in der Transportstellung eine Höhe auf, durch welche keine Behinderungen bedingt werden. Diese Konstruktion ist jedoch deshalb nachteilig, da der oberhalb des mittleren Tragrahmenteiles befindliche Raum nicht für einen Sämaschinenaufbau oder für ein Transportgestell, einen sog. Aufsattelrahmen, zur Verfügung steht. Ein weiterer Nachteil einer derartigen Vorrichtung besteht darin, dass deren maximale Arbeitsbreite auf etwa 5,6 m beschränkt ist.

Aus der US-A-4878545 ist weiters eine Vorrichtung zur Bodenbearbeitung bekannt, bei welcher die beiden außen befindlichen Tragrahmenteile am mittleren Tragrahmenteil beweglich angelenkt sind, wodurch sie in der Arbeitsstellung gegenüber dem mittleren Tragrahmenteil höhenverstellbar sind.

Der gegenständlichen Erfindung liegt die Aufgabe zugrunde, eine Vorrichtung zur Bodenbearbeitung mit drei nebeneinander angeordneten Tragrahmenteilen zu schaffen, bei welcher für die Transportstellung die beiden außen befindlichen Tragrahmenteile gegenüber dem mittleren Tragrahmenteil so verschwenkbar sind, dass eine möglichst geringe Transportbreite erzielbar ist und bei welcher in der Arbeitsstellung die beiden außen befindlichen Tragrahmenteile sich gegenüber dem mittleren Tragrahmenteil in einer solchen Lage befinden, dass eine ebene Bearbeitungsfläche erzielt wird, was für nachfolgende Bodenbearbeitungen, z.B. für nachfolgendes Aussäen, von Bedeutung ist.

Diese Aufgaben werden erfindungsgemäß dadurch gelöst, dass für die Transportstellung die beiden außen befindlichen Tragrahmenteile mittels der Stellhebel in einer translatorischen Bewegung in vertikale Lagen oberhalb und zumindest teilweise innerhalb des mittleren Tragrahmenteiles verstellbar sind und dass für die Arbeitsstellung die beiden außen befindlichen Tragrahmenteile mit dem mittleren Tragrahmenteil starr verbindbar sind.

Dadurch, dass die beiden außen befindlichen Tragrahmenteile in translatorischen Bewegungen in angenähert vertikale Lagen oberhalb des mittleren Tragrahmenteiles verstellt werden, wird einerseits in der Transportstellung eine vorgegebene Höhe nicht überschritten und verbleibt andererseits oberhalb des mittleren Tragrahmenteiles der für einen Sämaschinenaufbau bzw. für ein Transportgestell erforderliche Raum. Dadurch dass in der Arbeitsstellung die beiden außen befindlichen Tragrahmenteile mit dem mittleren Tragrahmenteil starr verbunden sind, wird eine ebene Bearbeitungsfläche erzielt, was für nachfolgende Bodenbearbeitungen, wie Aussäen, von Bedeutung ist.

Nach einer bevorzugten ersten Ausführungsform sind zwischen dem mittleren Tragrahmenteil und den beiden außen befindlichen Tragrahmenteilen jeweils einander zugeordnete Verriegelungen vorgesehen, durch welche die drei Tragrahmenteile in deren Arbeitslagen miteinander starr verbunden sind. Dabei können die einander zugeordneten Tragrahmenteile mit aneinander zur Anlage kommenden Vorsprüngen und Ausnehmungen ausgebildet sein, durch welche sie miteinander verriegelbar sind.

Vorzugsweise ist an den mittleren Tragrahmenteil und an die beiden außen befindlichen Tragrahmenteile jeweils mindestens ein Zugelement angelenkt, durch welches die beiden außen befindlichen Tragrahmenteile in ihren Arbeitslagen in der verriegelten Stellung gehalten sind und während ihrer translatorischen Stellbewegungen geführt werden. Dabei kann das mindestens eine Zugelement durch eine Zugstange gebildet sein, welche an den Tragrahmenteilen angelenkt ist. Weiters ist vorzugsweise dieses Zugelement, insbesondere die Zugstange, in seiner wirksamen Länge einstellbar. Hierfür kann an die mindestens eine Zugstange an einem ihrer Enden mit einem Außengewinde ausgebildet sein, auf welchem eine Stellmutter verschraubbar ist.

Vorzugsweise ist jeweils einer der einander zugeordneten Tragrahmenteile mit einem in einem Lager verdrehbaren Bolzen ausgebildet, welcher mit einer Querbohrung ausgebildet ist, die von der Zugstange durchsetzt ist und befindet sich weiters die Lagerung des Stellhebels am mittleren Tragrahmenteil zwischen der Lagerung der Zugstange und der Verriegelung mit dem anliegenden, außen befindlichen Tragrahmenteil.

Nach einer bevorzugten zweiten Ausführungsform sind an den mittleren Tragrahmenteil und an die beiden außen befindlichen Tragrahmenteile als Zug- und Druckstangen wirkende Verriegelungsstangen angelenkt, durch welche die drei Tragrahmenteile in deren Arbeitslagen miteinander starr verbunden sind. Vorzugsweise sind dabei die Verriegelungsstangen an ihren freien Enden mit einem Außengewinde ausgebildet, auf welche Verriege-lungselemente, insbesondere Muttern, aufschraubbar sind.

Weiters ist vorzugsweise der Stellzylinder mit mindestens einem hydraulisch entsperrbaren Rückschlagventil ausgebildet. Vorzugsweise ist der Stellhebel am äußeren Tragrahmenteil angelenkt, wobei sich dessen Lagerung am mittleren Tragrahmenteil oberhalb der anderen Lagerung befindet.

Eine erfindungsgemäße Vorrichtung ist nachstehend anhand eines in der Zeichnung dargestellten Ausführungsbeispieles näher erläutert. Es zeigen:
- Fig. 1: eine erfindungsgemäße Vorrichtung, in Seitenansicht;
- Fig.2: die Vorrichtung gemäß Fig.1, in Richtung des Pfeiles A der Fig.1 gesehen, in ihrer Arbeitslage;
- Fig.3: die Vorrichtung gemäß Fig.1, in der Ansicht der Fig.2, in einer Mittelstellung bei der Verstellung der beiden äußeren Tragrahmenteile in die Transportlage;
- Fig.4: die Vorrichtung gemäß Fig.1, in der Ansicht der Fig.2 in ihrer Transportlage;
- Fig.5: das Detail B der Fig.2, in gegenüber dieser vergrößertem Maßstab,
- Fig.5a: den Schnitt Va-Va der Fig.5 und
- Fig.6: eine zweite Ausführungsform einer erfindungsgemäßen Vorrichtung, in der Darstellung der Fig.5.

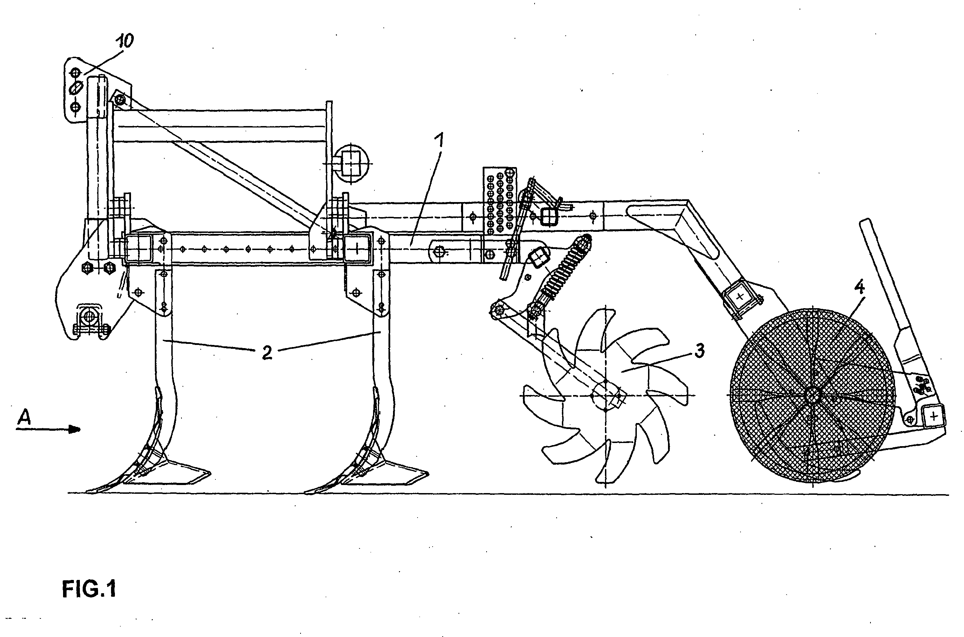

Die in Fig. 1 dargestellte Vorrichtung zur Bodenbearbeitung weist einen Tragrahmen 1 auf, welcher mittels einer Dreipunktaufhängung 10 an ein Zugfahrzeug ankuppelbar ist und an welchem in Bewegungsrichtung hintereinander zwei Reihen von Grubberzinken 2, weiters eine Reihe von Schneid-rädern 3 und zudem eine Reihe von Walzen 4 angeordnet sind. Die einzelnen Arbeitswerkzeuge 2, 3 und 4 befinden sich quer zur Fahrtrichtung neben-einander. Mittels einer derartigen Vorrichtung zur Bodenbearbeitung wird durch die Grubberzinken 2 der Boden aufgebrochen, werden mittels der Schneidräder 3 die im Erdreich befindlichen Ernterückstände, wie Wurzeln, zerschnitten und erfolgt durch die Walzen 4 eine Glättung des Erdreiches.

Aufgrund der großen Zugleistungen von Zugfahrzeugen kann eine derartige Vorrichtung eine Breite von bis über 6 m aufweisen. Da jedoch bei deren Transport die Breite von 3 m nicht überschritten werden darf, muß diese Vorrichtung für den Straßentransport auf etwa die halbe Breite gebracht werden.

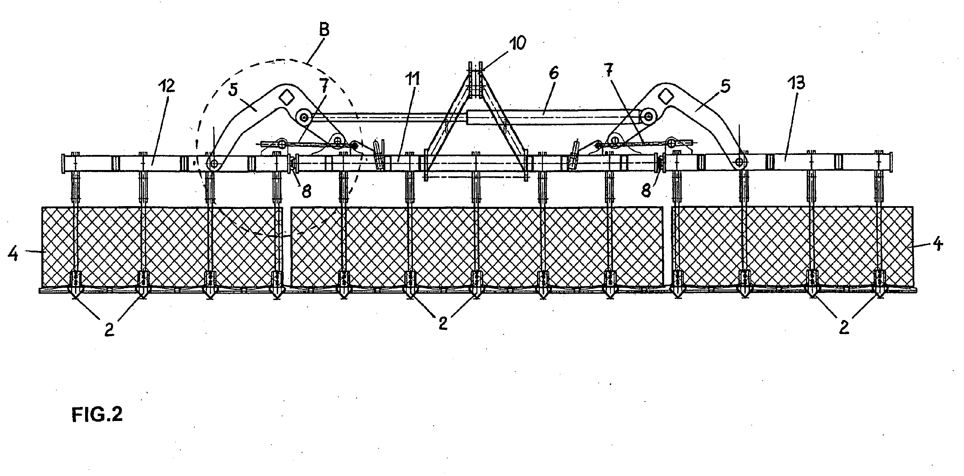

Wie dies aus den Fig.2 bis 4 ersichtlich ist, ist der Tragrahmen 1 in drei Tragrahmenteile 11, 12 und 13 unterteilt, an welchen sich die Arbeitswerkzeuge 2, 3 und 4 befinden, wobei der mittlere Tragrahmenteil 11 eine Breite von etwa 2,5 m aufweist und die beiden seitlich außen befindlichen Tragrahmenteile 12 und 13 jeweils eine Breite von etwa 1,5 m aufweisen. Die beiden außen befindlichen Tragrahmenteile 12 und 13 sind am mittleren Tragrahmenteil 11 mittels zweier Stellhebel 5, welche mittels eines Stellzylinders 6 verstellbar sind, angelenkt. Der Stellzylinder 6 ist an die beiden Stellhebel 5 angelenkt. Zur gesteuerten Führung während der Verstellung der beiden außen befindlichen Tragrahmenteile 12 und 13 gegenüber dem mittleren Tragrahmenteil 11 sind weiters Zugelemente 7 vorgesehen. In der Arbeitslage sind die beiden außen befindlichen Tragrahmenteile 12 und 13 mittels Verriegelungen 8 mit dem mittleren Tragrahmenteil 11 starr verbunden.

In Fig.2 ist die Vorrichtung in ihrer Arbeitslage dargestellt, in welcher die Tragrahmenteile 12 und 13 mittels der Verriegelungen 8 mit dem mittleren Tragrahmenteil 11 starr gekuppelt sind, wodurch die vom Zugfahrzeug aufgebrachten Kräfte über den mittleren Tragrahmenteil 11 und die seitlich außen befindlichen Tragrahmenteile 12 und 13 an den Arbeitswerkzeugen 2, 3 und 4 zur Wirkung kommen. Sobald diese Vorrichtung in ihre Transportlage gebracht werden soll, werden die Stellhebel 5 mittels des Stellzylinders 6 gegeneinander verschwenkt, wodurch die Tragrahmenteile 12 und 13 in vertikale Lagen oberhalb und weitgehend innerhalb der Breite des mittleren Tragrahmenteiles 11 gelangen.

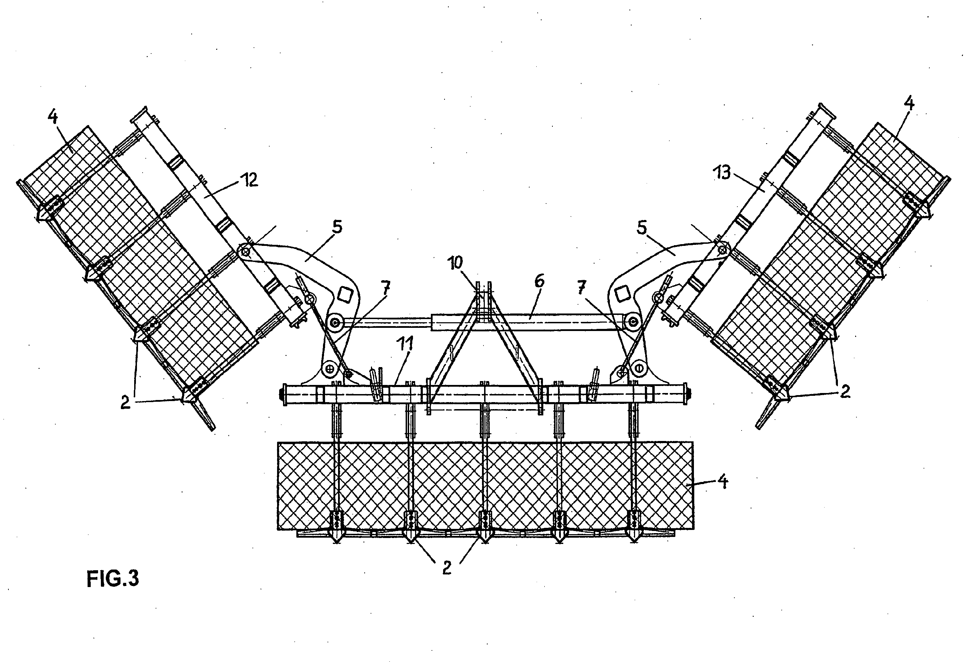

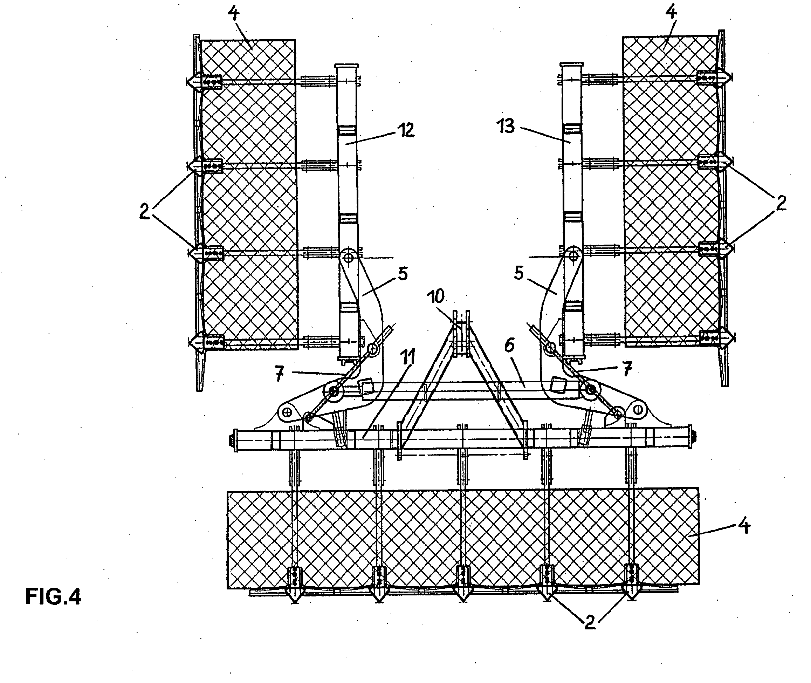

In Fig.3 ist eine mittlere Lage in der Verschwenkbewegung der beiden außen befindlichen Tragrahmenteile 12 und 13 dargestellt. In Fig. 4 ist die Transportlage dieser Vorrichtung dargestellt.

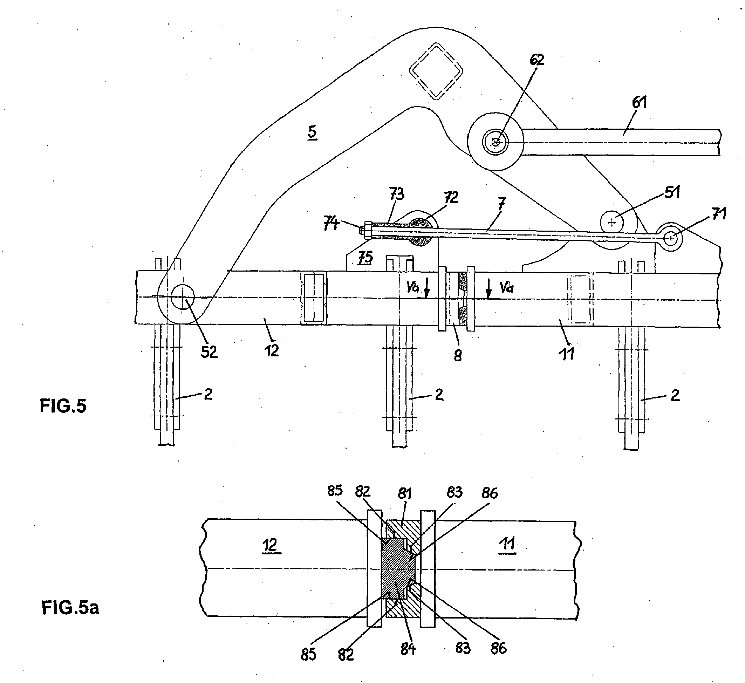

Nachstehend sind anhand der Fig.5 und 5a die Ausbildung und die Wirkungsweise der Stellhebel 5, des Stellzylinders 6, der Zugelemente 7 und der Verriegelungen 8 erläutert, wobei auf den mittleren Tragrahmenteil 11 und den links außen befindlichen Tragrahmenteil 12 Bezug genommen ist.
Der mittlere Tragrahmenteil 11ist an seinem äußeren Ende mit einem Schwenklager 51 für das Ende des hakenförmig abgewinkelten Stellhebels 5 ausgebildet, welcher mit seinem anderen Ende mittels eines Bolzens 52 an den Tragrahmenteil 12 angelenkt ist. Die Kolbenstange 61 des Stellzylinders 6 ist mittels eines Bolzens 62 an denjenigen Schenkel des Stellhebels 5 angelenkt, welcher am mittleren Tragrahmenteil 11 gelagert ist. Der Stellzylinder 6 ist mittels eines Bolzens an den anderen Stellhebel 5 angelenkt. Weiters ist der mittlere Tragrahmenteil 11 mit einem Schwenklager 71 für das als Zugstange 7 ausgebildete Zugelement ausgebildet. Die Zugstange 7 durchsetzt in einer Querbohrung einen Lagerbolzen 72, welcher sich zwischen zwei vom Tragrahmenteil 12 quer abragenden Laschen 75 befindet und in diesen gelagert ist. Weiters ist auf das den Lagerbolzen 72 durchsetzende Ende der Zugstange 7, welche mit einem Außengewinde ausgebildet ist, eine Druckhülse 73 aufgesetzt und ist auf das Außengewinde eine Stellmutter 74 aufgeschraubt.

Die Arbeitswerkzeuge 2, 3 und 4 ragen vom mittleren Tragrahmenteil 11 und von den beiden außen befindlichen Tragrahmenteilen 12 und 13 nach unten ab. Das Schwenklager 51 des Stellhebels 5 am mittleren Tragrahmenteil 11 befindet sich oberhalb der Verriegelung 8 und oberhalb des Bolzens 52, durch welchen der Stellhebel 5 an den außen befindlichen Tragrahmenteil 12 angelenkt ist. Weiters befindet sich das Schwenklager 71 der Zugstange 7 von der Verriegelung 8 weiter entfernt als das Schwenklager 51 des Stellhebels 5. Zudem befinden sich die beiden Schwenklager 71 und 72 der Zugstange 7 oberhalb des Anlenkpunktes 52 des Stellhebels 5 am Tragrahmenteil 12.

Wie dies weiters aus Fig 5a ersichtlich ist, besteht die an den aneinander liegenden Stirnflächen des mittleren Tragrahmenteiles 11 und des außen befindlichen Tragrahmenteiles 12 angeordnete Verriegelung 8 aus einem am mittleren Tragrahmenteil 11 angeordneten Verriegelungsblock 81, welcher mit Anschlagflächen 82 und mit Konusflächen 83 ausgebildet ist. Am außen befindlichen Tragrahmenteil 12 ist ein dem Verriegelungsblock 81 gegengleich ausgebildeter Verriegelungsblock 84 angeordnet, welcher mit den Anschlagflächen 82 und den Konusflächen 83 zugeordneten Anschlagflächen 85 und Konusflächen 86 versehen ist.
Die Konusflächen 83 und 86 dienen dazu, während der Kupplung der beiden Tragrahmenteile 11 und 12 die erforderliche Führung zu bewirken. Durch die Anschlagflächen 82 und 85 werden die beim Betrieb der Vorrichtung zwischen den Tragrahmenteilen 11 und 12 auftretenden Kräfte übertragen.
Der andere seitlich außen befindliche Tragrahmenteil 13 ist mit dem mittleren Tragrahmenteil 11 mittels eines zweiten Stellhebels 5, mittels mindestens einer zweiten Zugstange 7 und mittels einer zweiten Verriegelung 8 kuppelbar.

In der Betriebslage der Vorrichtung, welche in Fig.2 dargestellt ist, befinden sich die Stellhebel 5, der Stellzylinder 6, die Zugstangen 7 und die Verriegelungen 8 in der in der Fig. 5 dargestellten Lage. Da die außen befindlichen Tragrahmenteile 12 und 13 durch die Zugstangen 7 an den mittleren Tragrahmenteil 11 angepreßt sind, sind durch die Verriegelungen 8 die Tragrahmenteile 12 und 13 am Tragrahmenteil 11 starr befestigt. Dadurch werden die vom Zugfahrzeug auf den mittleren Tragrahmenteil 11 übertragenen Zugkräfte über die Verriegelungen 8 auf die seitlich außen befindlichen Tragrahmenteile 12 und 13 und auf die Arbeitswerkzeuge 2, 3 und 4 übertragen. Die Verriegelungen 8 werden einerseits durch die Zugstangen 7 und andererseits durch die Stellhebel 5 gesichert. Die Stellhebel 5 verbleiben deshalb in ihrer Lage, da der Stellzylinder 6 mit einem hydraulisch entsperrbaren Rückschlagventil ausgebildet ist.

Durch die Muttern 74 sind die Spannkräfte der Zugstangen 7 einstellbar. Die Spannhülsen 73 dienen dazu, die Stellmuttern 74 außerhalb der Traglaschen 75, in welchen die Bolzen 72 gelagert sind, zugänglich zu machen.

Sobald die Vorrichtung in die Transportlage gebracht werden soll, wird der Stellzylinder 6 betätigt, wodurch die Kolbenstange 61 eingefahren wird. Hierdurch werden die beiden Stellhebel 5 um die Schwenklager 51 zueinander verschwenkt. Dadurch werden die einander zugeordneten Teile der Verriegelungen 8 voneinander gelöst und werden die beiden außen befindlichen Tragrahmenteile 12 und 13 gegenüber dem mittleren Tragrahmenteil 11 in translatorischen Bewegungen, welche durch die Zugstangen 7 gesteuert werden, in die Lagen gemäß den Fig. 3 und 4 verstellt.

Da bei dieser Vorrichtung durch die Zugstangen 7 nur Zugkräfte aufgenommen zu werden brauchen, können an deren Stelle auch andere Zugelemente, wie Zugseile oder Ketten, vorgesehen sein.

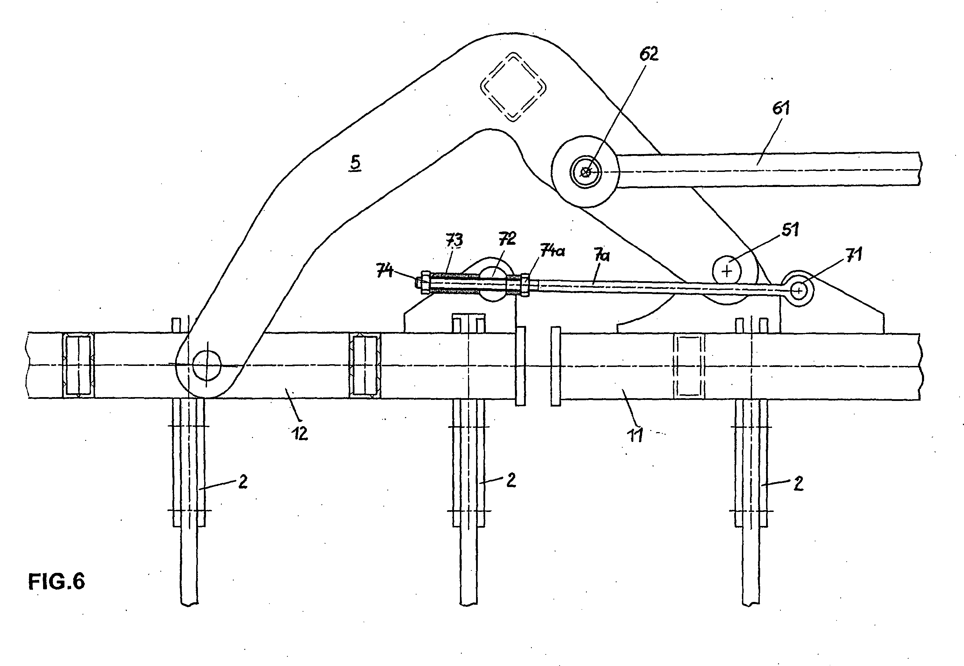

In Fig.6 ist eine zweite Ausführungsform einer derartigen Vorrichtung dargestellt, bei welcher zwischen dem mittleren Tragrahmenteil 11 und den beiden außen befindlichen Tragrahmenteilen 12 und 13 keine Verriegelung vorgesehen ist. Vielmehr wird dabei die Funktion der Verrieglung durch am mittleren Tragrahmenteil 11 in Schwenklagern 71 gelagerte Verriegelungsstangen 7a erfüllt, von welchen die zwischen dem mittleren Tragrahmenteil 11 und den außen befindlichen Tragrahmenteilen 12 und 13 auftretenden Zug- und Druckkräfte aufgenommen werden. Um diese Funktion zu erfüllen, sind die Verriegelungsstangen 7a in Richtung auf das Schwenklager 71 über den Lagerbolzen 72 hinaus mit einem Außengewinde ausgebildet, auf welches eine zweite Mutter 74a aufgeschraubt ist, welche an den Lagerbolzen 72 anliegt.
Somit ist eine Vorrichtung zur Bodenbearbeitung geschaffen, welche eine große Arbeitsbreite und eine den Erfordernissen entsprechende Transportbreite aufweist, wobei auch die Transporthöhe den Erfordernissen entsprechend gering ist und zwischen den aufgestellten außen befindlichen Tragrahmenteilen der für einen Sähmaschinenaufbau bzw. für ein Transportgestell erforderliche Raum zur Verfügung steht. Zudem sind die äußeren Tragrahmenteile am mittleren Tragrahmenteil starr befestigbar, wodurch in der Betriebslage die erforderliche Starrheit in der Befestigung der mit den Arbeitswerkzeugen ausgebildeten Tragrahmenteile gewährleistet ist.

## Patentansprüche

1. Vorrichtung zur Bodenbearbeitung bestehend aus einem an ein Zugfahrzeug ankuppelbaren mehrteiligen Tragrahmen (11,12,13) für Arbeitswerkzeuge, wie Grubberzinken (2), Schneidscheiben (3), Walzen (4) u.dgl, welche sich quer zur Fahrtrichtung des Zugfahrzeuges über eine Arbeitsbreite von mehreren Metern erstrekken, wobei die sich quer zur Fahrtrichtung nebeneinander befindlichen Arbeitswerkzeuge (2,3,4) an drei nebeneinander angeordneten Tragrahmenteilen (11,12,13) angeordnet sind und die beiden außen befindlichen Tragrahmenteile (12,13) mittels an diesen und am mittleren Tragrahmenteil [11] angelenkter Stellhebel (5), welche unter Wirkung mindestens eines Stellzylinders (6) stehen, aus ihrer Arbeitslage in gegenüber dem mittleren Tragrahmenteil [11] angenähert vertikale Lagen verstellbar sind, **dadurch gekennzeichnet, dass** für die Transportstellung die beiden außen befindlichen Tragrahmenteile (12, 13) mittels der Stellhebel (5) in translatorischen Bewegungen in Lagen oberhalb und zumindest teilweise innerhalb des mittleren Tragrahmenteiles (11) verstellbar sind und dass in der Arbeitsstellung die beiden außen befindlichen Tragrahmenteile (12, 13) mit dem mittleren Tragrahmenteil (11) starr verbunden sind.

2. Vorrichtung nach Patentanspruch 1, **dadurch gekennzeichnet, dass** zwischen dem mittleren Tragrahmenteil (11) und den beiden außen befindlichen Tragrahmenteilen (12,13) jeweils einander zugeordnete Verriegelungen (8) vorgesehen sind, durch welche die drei Tragrahmenteile (11,12,13) in deren Arbeitslagen miteinander starr verbunden sind.

3. Vorrichtung nach Patentanspruch 2, **dadurch gekennzeichnet, dass** die einander zugeordneten Tragrahmenteile (11,12,13) mit aneinander zur Anlage kommenden Vorsprüngen (81) und Ausnehmungen ausgebildet sind, durch welche sie miteinander verriegelbar sind.

4. Vorrichtung nach einem der Patentansprüche 1 bis 3, **dadurch gekennzeichnet, dass** an den mittleren Tragrahmenteil (11) und an die beiden außen befindlichen Tragrahmenteile (12,13) jeweils mindestens ein Zugelement (7) angelenkt ist, durch welches die beiden außen befindlichen Tragrahmenteile (12,13) in ihren Arbeitslagen in der verriegelten Stellung gehalten sind und während ihrer translatorischen Stellbewegungen geführt werden.

5. Vorrichtung nach Patentanspruch 4, **dadurch gekennzeichnet, dass** das mindestens eine Zugelement durch eine Zugstange (7) gebildet ist, welche an den Tragrahmenteilen (11,12,13) angelenkt ist.

6. Vorrichtung nach einem der Patentansprüche 4 und 5, **dadurch gekennzeichnet, dass** das mindestens eine Zugelement, insbesondere die Zugstange (7), in seiner wirksamen Länge einstellbar ist.

7. Vorrichtung nach einem der Patentansprüche 5 und 6, **dadurch gekennzeichnet, dass** die mindestens eine Zugstange (7) an einem ihrer Enden mit einem Außengewinde ausgebildet ist, auf welchem eine Stellmutter (74) verschraubbar ist.

8. Vorrichtung nach einem der Patentansprüche 4 bis 7, **dadurch gekennzeichnet, dass** jeweils einer der einander zugeordneten Tragrahmenteile (11,12,13) mit einem in einem Lager verdrehbaren Bolzen (72) ausgebildet ist, welcher mit einer Querbohrung ausgebildet ist, die von der Zugstange (7) durchsetzt ist.

9. Vorrichtung nach einem der Patentansprüche 4 bis 8, **dadurch gekennzeichnet, dass** sich die Lagerung (51) des Stellhebels (5) am mittleren Tragrahmenteil [11] zwischen der Lagerung (71) der Zugstange (7) und der Verriegelung (8) mit dem anliegenden außen befindlichen Tragrahmenteil (12) befindet.

10. Vorrichtung nach Patentanspruch 1, **dadurch gekennzeichnet, dass** an den mittleren Tragrahmenteil (11) und an die beiden außen befindlichen Tragrahmenteile (12,13) als Zug- und Druckstangen wirkende Verriegelungsstangen (7a) angelenkt sind, durch welche die drei Tragrahmenteile (11, 12, 13) in deren Arbeitslagen miteinander starr verbunden sind.

11. Vorrichtung nach Patentanspruch 10, **dadurch gekennzeichnet, dass** die Verriegelungsstangen (7a) an ihren freien Enden mit einem Außengewinde ausgebildet sind, auf welches Verriegelungselemente, insbesondere Muttern (74a), aufschraubbar sind.

12. Vorrichtung nach einem der Patentansprüche 1 bis 11, **dadurch gekennzeichnet, dass** der Stellzylinder (6) mit mindestens einem hydraulisch entsperrbaren Rückschlagventil ausgebildet ist.

13. Vorrichtung nach einem der Patentansprüche 1 bis 12, **dadurch gekennzeichnet, dass** der Stellhebel (5) am äußeren Tragrahmenteil (12) angelenkt ist, wobei sich dessen Lagerung (51) am mittleren Tragrahmenteil [11] oberhalb der anderen Lagerung (52) befindet.

## Claims

1. A soil cultivating device consisting of a multipart supporting frame (11, 12, 13), couplable to a traction vehicle, for working tools, such as cultivator tines (2), cutting discs (3), rollers (4) and the like, which extend transversely of the direction of travel of the traction vehicle over a working width of several metres, the working tools (2, 3, 4) located next to one another transversely of the direction of travel being arranged on three supporting frame parts (11, 12, 13) arranged next to one another and the two outer supporting frame parts (12, 13) being adjustable by means of adjusting levers (5) coupled thereto and to the central supporting frame part (11), said levers (5) being acted upon by at least one actuating cylinder (6), from their working position into approximately vertical positions relative to the central supporting frame part (11), **characterised in that** the two outer supporting frame parts (12, 13) may be adjusted for the transport position by means of the adjusting levers (5) in translational movements into positions above and at least in part inside the central supporting frame part (11) and **in that**, in the working position, the two outer supporting frame parts (12, 13) are connected rigidly to the central supporting frame part (11).

2. A device according to claim 1, **characterised in that** in each case mutually associated locking devices (8) are provided between the central supporting frame part (11) and the two outer supporting frame parts (12, 13), by means of which locking devices (8) the three supporting frame parts (11, 12, 13) are connected rigidly together in their working positions.

3. A device according to claim 2, **characterised in that** the mutually associated supporting frame parts (11, 12, 13) are provided with projections (81) and recesses coming to rest against one another, by means of which they are locked together.

4. A device according to any one of claims 1 to 3, **characterised in that** in each case at least one draw element (7) is coupled to the central supporting frame part (11) and to the two outer supporting frame parts (12, 13), by means of which draw element (7) the two outer supporting frame parts (12, 13) are held in the locked position in their working positions and are guided during their translational adjusting movements.

5. A device according to claim 4, **characterised in that** the at least one draw element takes the form of a draw rod (7) which is coupled to the supporting frame parts (11, 12, 13).

6. A device according to either one of claims 4 and 5, **characterised in that** the effective length of the at least one draw element, in particular the draw rod (7), is adjustable.

7. A device according to either one of claims 5 and 6, **characterised in that** the at least one draw rod (7) is provided at one of its ends with an external thread, on which an adjusting nut (74) may be screwed.

8. A device according to any one of claims 4 to 7, **characterised in that** in each case one of the mutually associated supporting frame parts (11, 12, 13) is provided with a pin (72) rotatable in a bearing, which pin is provided with a transverse bore, through which passes the draw rod (7).

9. A device according to any one of claims 4 to 8, **characterised in that** the bearing arrangement (51) for the adjusting lever (5) is located on the central supporting frame part (11) between the bearing arrangement (71) for the draw rod (7) and the locking device (8) engaging with the adjacent outer supporting frame part (12).

10. A device according to claim 1, **characterised in that** locking rods (7a) acting as draw and pusher rods are coupled to the central supporting frame part (11) and to the two outer supporting frame parts (12, 13), said locking rods (7a) connecting the three supporting frame parts (11, 12, 13) rigidly together in their working positions.

11. A device according to claim 10, **characterised in that** the locking rods (7a) are provided at their free ends with an external thread, onto which locking elements, in particular nuts (74a), may be screwed.

12. A device according to any one of claims 1 to 11, **characterised in that** the actuating cylinder (6) is provided with at least one hydraulically pilot-controlled non-return valve.

13. A device according to any one of claims 1 to 12, **characterised in that** the adjusting lever (5) is coupled to the outer supporting frame part (12), wherein the bearing arrangement (51) thereof is located on the central supporting frame part (11) above the other bearing arrangement (52).

## Revendications

1. Dispositif pour le travail du sol, composé d'un châssis porteur (11, 12, 13) en plusieurs parties, apte à être attelé à un tracteur, pour des outils de travail tels que des dents de cultivateur (2), des disques de coupe (3), des rouleaux (4), etc., qui s'étendent sur une largeur de travail de plusieurs mètres transversalement par rapport au sens de déplacement du tracteur, étant précisé que les outils de travail (2, 3, 4) qui se trouvent côte à côte transversalement par rapport au sens de déplacement sont disposés sur trois éléments de châssis porteur (11, 12, 13) eux-mêmes disposés côte à côte, et que les deux éléments de châssis porteurs situés à l'extérieur (12, 13) sont aptes à être amenés de leur position de travail à des positions approximativement verticales par rapport à l'élément de châssis central (11) à l'aide de leviers de réglage (5) qui sont articulés sur eux et sur l'élément de châssis central (11) et qui sont soumis à l'action d'au moins un vérin (6),
**caractérisé en ce que** pour la position de transport, les deux éléments de châssis porteur situés à l'extérieur (12, 13) sont aptes à être amenés suivant des mouvements de translation, à l'aide des leviers de réglage (5), dans des positions au-dessus et au moins partiellement à l'intérieur de l'élément de châssis porteur central (11), et **en ce que** dans la position de travail, les deux éléments de châssis situés à l'extérieur (12, 13) sont reliés rigidement à l'élément de châssis central (11).

2. Dispositif selon la revendication 1, **caractérisé en ce qu'**il est prévu, entre l'élément de châssis porteur central (11) et les deux éléments de châssis porteur situés à l'extérieur (12, 13), des mécanismes de verrouillage (8) associés l'un à l'autre grâce auxquels les trois éléments de châssis (11, 12, 13) sont reliés rigidement entre eux dans leur position de travail.

3. Dispositif selon la revendication 2, **caractérisé en ce que** les éléments de châssis porteur (11, 12, 13) associés sont pourvus de saillies (81) et de creux qui viennent s'appliquer les uns contre les autres et grâce auxquels ils peuvent être verrouillés entre eux.

4. Dispositif selon l'une des revendications 1 à 3, **caractérisé en ce qu'**il est prévu, articulé sur l'élément de châssis central (11) et sur les deux éléments de châssis situés à l'extérieur (12, 13), au moins un élément de traction (7) grâce auquel lesdits éléments de châssis (12, 13) sont maintenus en position verrouillée, dans leur position de travail, et sont guidés pendant leurs mouvements de translation.

5. Dispositif selon la revendication 4, **caractérisé en ce que** le ou les éléments de traction sont formés par une tige de traction (7) qui est articulée sur les éléments de châssis porteur (11, 12, 13).

6. Dispositif selon la revendication 4 ou 5, **caractérisé en ce que** la longueur active du ou des éléments de traction, en particulier de la tige de traction (7), est réglable.

7. Dispositif selon la revendication 5 ou 6, **caractérisé en ce que** la ou les tiges de traction (7) sont pourvues, à une extrémité, d'un filetage extérieur sur lequel un écrou de réglage (74) peut être vissé.

8. Dispositif selon l'une des revendications 4 à 7, **caractérisé en ce que** l'un des éléments de châssis porteur (11, 12, 13) associés est pourvu d'un axe (72) qui est apte à pivoter dans un palier et qui présente un perçage transversal traversé par la tige de traction (7).

9. Dispositif selon l'une des revendications 4 à 8, **caractérisé en ce que** le palier (51) du levier de réglage (5) se trouve sur l'élément de châssis porteur central (11), entre le palier (71) de la tige de traction (7) et le mécanisme de verrouillage (8) avec l'élément de châssis extérieur (12) appliqué.

10. Dispositif selon la revendication 1, **caractérisé en ce qu'**il est prévu, articulées sur l'élément de châssis central (11) et sur les deux éléments de châssis situés à l'extérieur (12, 13), des tiges de verrouillage (7a) qui agissent comme des tiges de traction-compression et grâce auxquelles les trois éléments de châssis porteur (11, 12, 13) sont reliés rigidement entre eux dans leur position de travail.

11. Dispositif selon la revendication 10, **caractérisé en ce que** les tiges de verrouillage (7a) sont pourvues, à leur extrémité libre, d'un filetage extérieur sur lequel des éléments de verrouillage, en particulier des écrous (74a), peuvent être vissés.

12. Dispositif selon l'une des revendications 1 à 11, **caractérisé en ce que** le vérin (6) est pourvu d'au moins un clapet antiretour à déblocage hydraulique.

13. Dispositif selon l'une des revendications 1 à 12, **caractérisé en ce que** le levier de réglage (5) est articulé sur l'élément de châssis extérieur (12), son palier (51) se trouvant sur l'élément de châssis porteur central (11) au-dessus de l'autre palier (52).
